# EUROPEAN PATENT APPLICATION

(11) **EP 1 043 670 A2**
(43) Date of publication of application: **11.10.2000**
(21) Application number: 00301792.8
(22) Date of filing: 06.03.2000
(51) Int. Cl.: G06F 17/60, G06F 17/30

(54) **Information retrieval system and method**

(30) Priority: 09.04.1999 US 289260
(71) Applicant: Hewlett-Packard Company, Palo Alto, California 94304 (US)
(72) Inventor: Carau, Frank P., Loveland, CO 80538 (US)
(74) Representative: Colgan, Stephen James

(57) **Abstract**

An information retrieval system (100) is disclosed herein. The system (100) may be used to assist a user in retrieving information located on the Internet when the location of the information is in printed form. The Internet addresses of the locations of the information may be printed as bar codes (380). A bar code scanner (200) may be electrically connected to a computer (102) and the computer (102), in turn, may be connected to the Internet. A user scans the bar code (380) representative of the Internet address with the bar code scanner (200). Image data representative of the Internet address may be generated by the bar code scanner (200) and transmitted to the computer (102), which causes the computer (102) to run a web browsing program and to retrieve the information located at the scanned Internet address.

## Description

### Technical Field of the Invention

The present invention relates to retrieving information and, more particularly, to eliminating the need to manually type an Internet address into a computer to retrieve information from the Internet when the Internet address is in printed form.

### Background of the Invention

In this information age, people have access to vast amounts of information relating to virtually any topic. One source of information is available through the Internet. The Internet and subsets of the Internet, e.g., the world wide web, are all referred to collectively herein as the Internet. Information is available via the Internet through many different sources, e.g., government institutions, retailers, and education institutions. These information sources are available to Internet users via Internet addresses wherein each source of information has a unique Internet address. An Internet address is often referred to as a universal resource locator or simply a URL.

An example of an information source available via the Internet is commonly known in the art as a web page. A web page is a collection of information having a unique location on the Internet defined by a URL. The web page may include a combination of text, graphics, movies, and audible information that are displayed and emitted by a computer. A user requesting the information contained in a specific web page may enter the URL of the web page into an Internet browsing program, referred to herein simply as a "web browser." The web browser retrieves the information located at the web page and displays the information contained therein. With the rapid expanse of the Internet, the URLs of web pages are becoming evermore complex. They typically have several character groups separated by various symbols, making the process of entering many URLs into a web browser substantially complicated.

Locating information on the Internet has been simplified by the use of the hypertext markup language, referred to herein simply as HTML, and other similar programming languages. HTML is an example of a computer language that is used to create web pages. The information displayed on a web page created with HTML may have references to other sources of information. These references are typically other web pages that are accessible through the use of links, which are URLs indicating the locations of the other sources of information. HTML recognizes these links and, upon a user instruction, directs the web browser to retrieve the web pages at the URLs specified by the links. Thus, a user may, by the use of links, retrieve information located on other web pages by instructing the web browser to retrieve the web pages where the other information is located. The links typically describe the information being sought, and not the URL where the web page is located. Accordingly, a user typically does not know the URLs of the links.

The above-described method of retrieving information has been further simplified by the use of a pointing device, e.g., a mouse attached to the processor. A user may manually manipulate the mouse, which causes a pointer or cursor on a video display connected to the processor to move. The user may move the pointer to a link and depress a button on the pointing device. Depressing the button initiates instructions that cause the web browser to retrieve the information located at the URL specified by the link.

As an example of using the Internet, a retail company may have a web page that briefly describes some of the products sold by the company. This web page, often referred to as a home page, may be accessed by entering a simple URL into the web browser. The home page may contain links to other web pages that offer specific information about certain products and services offered by the company. These web pages may, in turn, have additional links to other web pages that offer more detailed information about the products and services. This linking of the web pages may continue indefinitely. The web pages are typically written per HTML specifications wherein the URLs for web pages pertaining to these other products and information are encoded within the web pages as links as describe above.

Using a video display and a pointing device make accessing information from a web site very easy because the web pages use the HTML specification to link to other web pages specified by the URLs. Accordingly, the user does not have to remember the URLs of different web pages or type in the rather long URLs for these web pages.

The above described system of retrieving information works well when a user is operating a computer that is connected to the Internet. This system, however, does not work with printed documents. Documents printed from web pages typically only contain the links and not the URLs associated with the links, thereby making it impossible for the user to locate the specific information on the Internet. In the event the printed document does contain URLs, the URLs are usually very long and cumbersome to type into a computer. As an example, the current URL for a web page describing personal computers offered by the Hewlett Packard Company is, "http://www.pandi.hp.com/pandi-db/dds_product_list.show2?p_prod_catgy_id= 1&p _prod_ type_id=6&p_family=PersonalPrinters."

The burden of typing complex URLs into a computer may cause the users to be reluctant to retrieve the additional information. In the case of advertising, a printed advertisement may indicate URLs where more information about the advertised products or services may be located. The reader, however, may not seek to retrieve the additional information due to the burden of typing complex URLs into the computer and, thus, the advertisement will not convey all the information possible to the reader.

Therefore, a need exists for a system that allows a user to easily and quickly supplement information provided by a printed document.

### Summary of the Invention

An information retrieval system and method are disclosed herein. The system may comprise a processor associated with an imaging device, wherein the processor is connected to the Internet. Indicia may be printed on a document, wherein the indicia are encoded with the Internet location of the information that is to be retrieved. A user may generate machine-readable data representative of the indicia with the imaging device. The machine-readable data may then be transmitted from the imaging device to the processor. The processor may analyze the machine-readable data to determine the Internet location of the information that is to be retrieved. A web browsing program then may instruct the processor to retrieve the information from the Internet location.

### Brief Description of the Drawing

Fig. 1 is an illustration of the information retrieval system associated with a page of text.
Fig. 2 is a flow chart describing the automatic detection system.
Fig. 3 is a flow diagram describing the associations between the elements comprising the information retrieval system.

### Detailed Description of the Invention

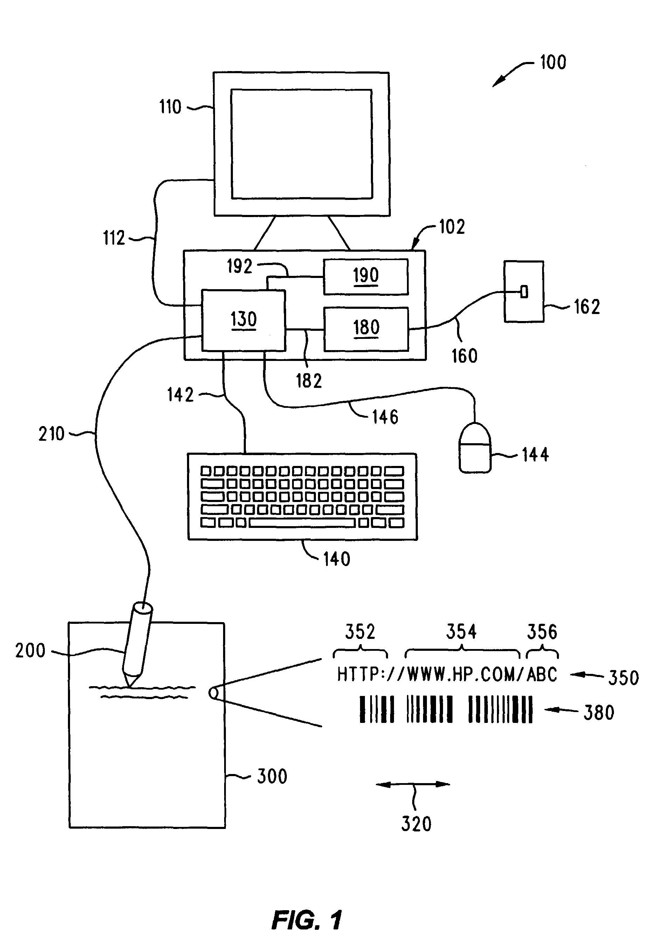

Figs. 1 through 3, in general, illustrate a method of retrieving information comprising: providing an imaging device 200; providing a processor 130 associated with said imaging device 200, wherein said processor 130 is connected to the Internet; providing at least one indicium 380, wherein said at least one indicium 380 is encoded with the Internet location of said information that is to be retrieved; generating machine-readable data representative of said at least one indicium 380 with said imaging device 200; transmitting said machine-readable data from said imaging device 200 to said processor 130; analyzing said machine-readable data to determine said Internet location of said information that is to be retrieved; instructing said processor 130 to retrieve said information from said Internet location.

Fig. 1 through 3 also, in general, illustrate a data retrieval system 100 comprising: a computer processor 130; a scanning device 200, operatively associated with said computer processor 200, said scanning device adapted to convert an indicium 380 to machine-readable data; deciphering means 412 for converting said machine-readable data to an Internet address specified by said indicium 380; Internet browsing means 416 for accessing the Internet at said Internet address specified by said indicium 380 and receiving data from said Internet address.

Referring to Fig. 1, the information retrieval system 100 disclosed herein provides a simplified method of retrieving information stored on the Internet wherein the location of the information is in printed form. The location of the information may, as an example, be encoded into an indicium 380 printed on a page 300 in a conventional manner. A user of the system 100 may use a scanning device 200 to generate an image of the indicium 380 in a conventional manner. The image of the indicium 380 may then be convened to machine-readable image data, referred to herein simply as image data, and transmitted to a computer 102. Upon receipt of the image data, the computer 102 may decipher the image data to determine the location on the Internet indicated by the indicum 380. The computer 102 may then run a web browsing program, often referred to herein simply as a web browser, and connect to the Internet. The computer 102 retrieves the information on the Internet from the location indicated by the indicum 380.

Having summarized the information retrieval system 100, it will now be described in detail. Fig. 1 illustrates an example of the information retrieval system 100 associated with a page of text 300. The system 100 may comprise a computer 102 and an imaging device 200. The computer 102 may comprise a processor 130, a modem 180, and a data storage device 190. The processor 130 may be electrically connected to the modem 180 by a data line 182 and to the data storage device 190 by a data line 192. The data storage device 190 described herein may include all data storage devices commonly located in a computer, such as magnetic media and electronic media, commonly referred to as random access memory. The modem 180 may be electrically connected to a data port 162 by a data line 160. The data port 162 may, as an example, be a telephone jack and the data line 162 may, as an example, be a telephone line.

The processor 130 may be electrically connected to a plurality of peripherals, including the imaging device 200. The processor 130 may be electrically connected to a video monitor 110 via a video data line 112. The processor 130 may be electrically connected a keyboard 140 by a data line 142. The processor 130 may be electrically connected to a pointing device 144, e.g., a mouse, by a data line 146. The processor 130 may be electrically connected to the imaging device 200 by an image data line 210. With the exception of the imaging device 200 and the image data line 210, the above-described peripherals connected to the processor 130 may be common computer peripherals as are known in the art.

The page 300 will be described herein as being a page from a retail sales catalog. It is to be understood, however, that the page 300 is illustrated herein as being from a retail sales catalog is for illustration purposes and that the page 300 may be virtually any form of printed material. The page 300 may, as an example, briefly describe products tat are advertised in the catalog. The descriptions of the products may be associated with a plurality of universal resource locators, sometimes referred to herein simply as URLs. The URLs may, for example, be Internet addresses that indicate the locations on the Internet of additional information that supplement the aforementioned product descriptions.

The URL 350, illustrated in Fig. 1, is an example of a URL in the form of an Internet address that may be printed on the page 300. The URL 350 is divided into three sections, the transport protocol 352, the domain name 354, sometimes referred to as the host name, and the directory 356, sometimes referred to as the file name. The domain name 354 may be associated with a location on the Internet, known as a home page. The directory 356 may contain several character sets separated by symbols, such as slashes and periods. The directory 356 generally serves to locate detailed information that is summarized in the home page. The location indicated by the directory 356 is generally referred to as a web page.

The domain name 354, illustrated in Fig. 1 is, "www.hp.com" which is a URL in the form of an Internet address for the home page of the Hewlett Packard Company. This home page on the Internet may, as an example, provide information regarding products and services offered by the Hewlett Packard Company. The directory 356 portion of the URL 350 directs the user to a specific product or service offered by the Hewlett Packard Company. The directory 356 is illustrated in Fig. 1 as having only three characters, "abc," however, it is to be understood that a directory typically contains a plurality of character groups separated by various symbols, e.g., slashes and periods. As an example, the URL for a web page currently describing personal printers sold by the Hewlett Packard company is: http://www.pandi.hp.com/ pandi-db/dds_product_list.show2?p_prod_catgy_id= 1&p_prod_type_id=6&p_family =PersonalPrinters. Accordingly, the directory in this example is: pandi-db/dds_ product_list.show2?p_prod_catgy_ id= 1 &p_prod_type_id=6&p_family=PersonalPrin ters.

If the reader of the page 300 is using a conventional computer, e.g., without the imaging device 200 and the related software as will be described below, retrieving information from the Internet based on a printed URL tends to be very cumbersome. The reader must first instruct the processor 130 to run a web browser program. The reader must then type the URL 350 that is printed on the page 300 into the processor 130 via the keyboard 140. Typing the URL 350 into the processor 130 tends to be cumbersome, especially when the directory 356 is long. If, by chance, the URL 350 is not input correctly, the information sought to be retrieved will not be retrieved. In the situation where the page 300 is an advertisement, the reader may decide against inputting a complex URL into the processor 130 because of the burden of typing the complex URL. This results in the advertisement not relaying the maximum information possible to the reader.

The information retrieval system 100 described herein alleviates the aforementioned problems in retrieving information by eliminating the need for the reader to type a URL into a computer. In summary, the reader may use the imaging device 200 to read the URL 350 by scanning the imaging device 200 across the bar code 380. As summarized above, the bar code 380 is an encoded representation of the URL 350. When the reader scans the bar code 380, the imaging device 200 generates machine-readable image data (referred to herein simply as image data) representing the image of the bar code 380. The image data may be transmitted to the processor 130 where it may be deciphered. When the image data is deciphered, the URL 350 is revealed. At this point, the processor 130 may commence running the web browsing program. When the web browsing program is running, the processor 130 may instruct modem 180 to connect to the Internet and retrieve the information located at the Internet address specified by the URL 350.

Having summarized the bar code 380 and the imaging device 200, they will now be described in detail. The bar code 380 may be an encoded version of the URL 350 as is known in the art. The bar code 380 may, as an example, be of the format that comprises a series of abutting stripes that are either relatively reflective or relatively nonreflective. The stripes may vary in width, wherein the widths of the stripes correspond to predetermined data bits as is known in the art. The cumulation of stripes may form a linear array extending along a horizontal axis 320 wherein the data is encoded on the bar code 380 along the horizontal axis 320. One example of a bar code format that comprises a linear array of stripes is known in the art as the Code 93 bar code format. The bar code 380 may be printed onto the page 300 by using a conventional bar code printing program that converts alphanumeric data to a bar code format and prints the bar code. As an example, a print driver may be stored in the data storage device 190 and may run on the processor 130. The print driver may recognize when a URL is to be printed and may cause a bar code representing the URL to be printed.

The imaging device 200 may, as an example, be a wand-type bar code reader as is known in the art. The imaging device 200 may generate machine-readable image data representing the image of the bar code 380 when the imaging device 200 is scanned across the bar code 380 in the direction of the horizontal axis 320. The machine-readable image data is sometimes referred to herein simply as image data. The image data may, as an example, comprise a series of high and low voltage pulses of varying width. A high voltage pulse may represent a reflective stripe and a low voltage pulse may represent a nonreflective stripe. The widths of the pulses may be proportional to the widths of the stripes. The image data may be transmitted from the imaging device 200 to the processor 130 via the image data line 210.

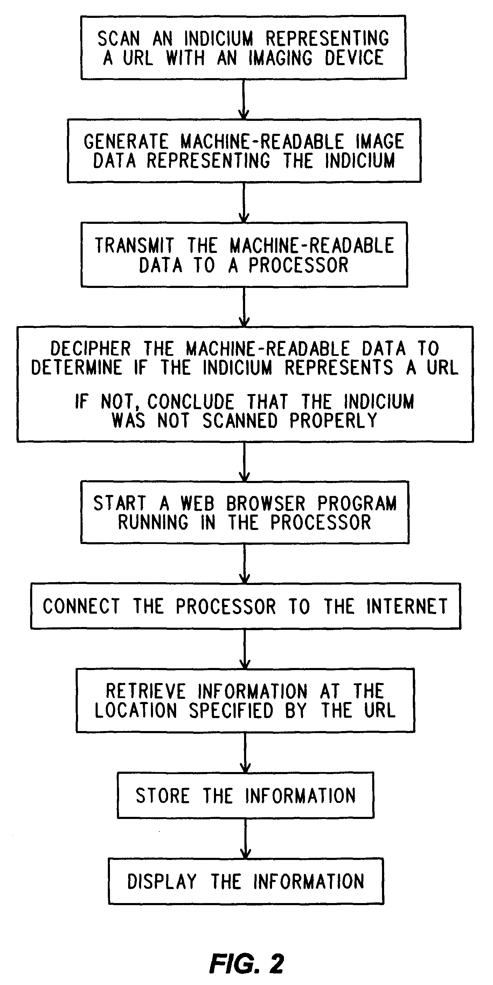

Having described the components comprising the information retrieval system 100, an example of using the system 100 will now be described. Fig. 2 illustrates a flow chart describing a method of using the information retrieval system 100, which is representative of the following description.

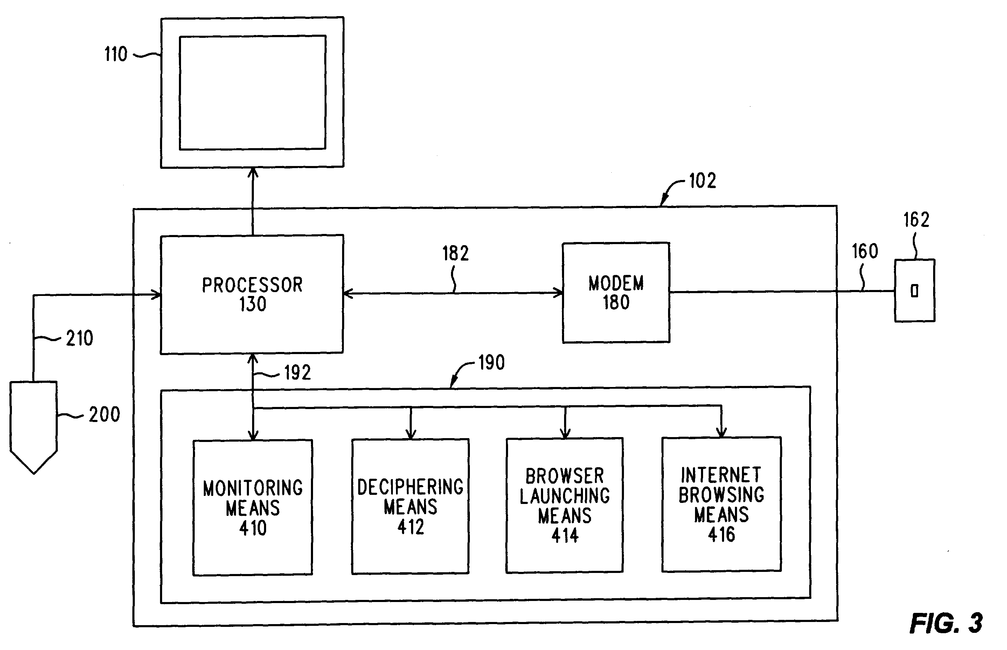

Fig. 3 is a flow diagram that illustrates the functions that may be performed by the computer 102. The central component in the computer 102 is the processor 130. The processor 130 may include a microprocessor and the hardware and software associated with the microprocessor as are known in the art. The computer 102 may have a monitoring means 410, a deciphering means 412, a browser launching means 414, and an Internet browsing means 416. The monitoring means 410, deciphering means 412, browser launching means 414, and Internet browsing means 416 may be software programs stored in the data storage device 190 and are described in detail below.

The information retrieval process commences with the reader scanning the bar code 380, Fig. 1, with the imaging device 200 in a conventional manner. The imaging device 200 generates image data in the form of a series of pulses that are representative of the bar code 380 as described above. The imaging device 200 transmits this image data to the processor 130 via the image data line 210.

The monitoring means 410 within the computer 102 monitors whether data is being transmitted to the processor 130 via the image data line 210. The monitoring means 410 may, as an example, be an arithmetic logic circuit configured to detect whether data is being transmitted on the image data line 210. As an example, the monitoring means 410 may be a program that is running continuously that monitors the data line 210. When image data is detected by the monitoring means 410, the monitoring means instructs the processor 130 to commence a series of instructions as are detailed below to retrieve the information sought by the user. The processor 130 may be running other programs while simultaneously monitoring the data line 210.

When the monitoring means 410 detects that image data is being transmitted to the processor 130, the monitoring means 130 may instruct the deciphering means 412 to commence analyzing the image data. The deciphering means 412 may, as an example, be an arithmetic logic circuit configured to decipher the bar code 380, Fig. 1. As an example, the deciphering means 412 may be a program that instructs the processor 130 to decipher the image data in a conventional manner. Deciphering the image data may, as an example, commence by determining whether the image data received from the imaging device 200 is in a predetermined format to represent the bar code 380. This step is performed to assure that the image data does not represent images other than the bar code 380, such as text on the page 300 or extraneous light. The deciphering means 412 may, as an example, measure the widths of the stripes, represented by the widths of the above-described voltage pulses comprising the image data, to determine if the ratio of the wide stripes to the narrow stripes corresponds to the predetermined bar code format. The deciphering means 412 may also determine if the proper number of wide and narrow stripes is present in the image data per the predetermined bar code format. If the image data does not correspond to the predetermined bar code format, the deciphering means 412 may instruct the processor 130 to terminate further processing of the image data and to resume monitoring the image data line 210 for new image data. The deciphering means 412 may cause a signal, such as an audible signal or a visual signal displayed on the monitor 110 to be transmitted indicating that the processor 130 received data other than image data representing the bar code 380.

If the image data corresponds to the predetermined bar code format, the deciphering means 412 deciphers the image data to determine the URL encoded in the bar code 380. Deciphering the image data may, as an example, be accomplished by comparing the arrangement of wide and narrow stripes to a data base wherein the data base correlates the arrangement of stripes to ASCII characters per the bar code format. The URL 350 may be stored in the data storage device 190 for use at a later time.

When the bar code 380 has been deciphered, the deciphering means 412 may instruct the processor 130 to activate the browser launching means 414. The browser launching means 414 may, as an example, be an arithmetic logic circuit configured to activate the Internet browsing means 416. The browser launching means 414 may, as an example, be a program stored in the data storage device 190. The browser launching means 414 may first determine if the Internet browsing means 416 is active, indicating that the processor 130 is connected to the Internet. If the Internet browsing means 416 is active, the browser launching means 414 may instruct the web browsing means 416 to retrieve data from the Internet address corresponding to the URL 350. If the Internet browsing means 416 is not active, the browser launching means 414 may instruct the processor 130 to connect to the Internet by activating the Internet browsing means 416. The browser launching means 414 may further instruct the Internet browsing means 416 to retrieve information located at the URL 350 when the processor 130 is connected to the Internet.

The Internet browsing means 416 may, as an example, be an arithmetic logic circuit configured to instruct the processor 130 to connect to the Internet via the data line 182, the modem 180, the data line 160, and the data line 162 in a conventional manner. When the processor 130 is connected to the Internet, the Internet browsing means 416 may instruct the processor 130 to retrieve the information located at the URL 350. The Internet browsing means 416 may process data received from the Internet into a format where it may be read by the reader. Additionally, in the event the data received from the Internet represents audible data, the Internet browsing means 416 may convert the data to an audible format.

When the information from the Internet is received by the processor 130, it is typically processed by the Internet browsing means 416 and stored in the data storage device 190. The information, generally in the form of a web page, is then displayed on the video monitor 110. When the data is in the form of a web page, the retrieval of additional data from the Internet may be simply accomplished. The data displayed on the monitor 110 may contain additional links that relate to additional information. The links may correspond to URLs indicating where the additional information is located on the Internet. The reader may move the pointing device 144 so that a cursor on the monitor 110 overlays a link associated with the additional information. The reader may then instruct the processor 130 to retrieve the additional information located at the URL, which is typically achieved by pressing a button located on the pointing device 144.

By using the information retrieval system 100 disclosed herein, an advertiser may advertise numerous products to a potential customer through a single printed document. The information retrieval system 100 provides the potential customer with a very simple means to connect his or her computer to the Internet, and more specifically, to the advertiser's web pages. Once the potential customer is viewing a web page on a monitor, the potential customer may quickly and easily review the advertiser's products and services. The potential customer may even purchase products and services offered by the advertiser by retrieving ordering information via a link provided by the advertiser and sending order information via the Internet to the advertiser.

Having described an embodiment of the information retrieval system 100, other embodiments of the system 100 will now be described. In one embodiment, the URL 350 and the bar code 380 may not have to include the transfer protocol 352, which, thus, shortens the URL 350. The Internet browsing means 416 may, as an example, assume that the hypertext transfer protocol (http) is being used and may automatically insert this information into the protocol portion 352 of the URL 350. The Internet browsing means 416 may further assume that the information being sought is located on the world wide web, thus, the URL 350 may simply be written as, "hp.com/abc." These embodiments shorten the URL 350 and the associated bar code 380. These embodiments, however, do not shorten the directory 356.

Another embodiment of the system 100 uses the text version of the URL 350 without the bar code 380. In this embodiment, the imaging device 200 may be an electronic text scanning device that images printed text as is known in the art. One example of such a text scanning device is known as a pen-type scanning device. The reader moves the text scanning device over the URL 350 to generate image data representing the URL 350. The deciphering means 141 then converts the image data to characters, which are the same characters used in the URL 350. The URL information is stored and used by the Internet browsing means 416 as described above. This embodiment reads the URLs directly without the need to translate the URLs to bar codes. This embodiment, however, may be more costly as text scanning devices are generally more expensive than wand-type bar code scanners.

Another embodiment of the system 100 eliminates the image data line 210. Transmission of the image data from the imaging device 200 to the computer 102 may be accomplished by other means, such as electromagnetic signals, light, e.g., infrared, and acoustic transmissions. This embodiment alleviates the need for the imaging device 200 to be physically attached to the computer 102.

Another embodiment of the system 100 uses data transmission techniques other than via the modem 180 to connect to the Internet. The modem 180 may, as an example, be substituted for a device that transmits and receives data via radio frequencies or a device that connects directly to the Internet, e.g., a server.

The system 100 has been described as using the URL 350 to locate information available on the Internet. Another embodiment of the system 100 locates information stored in the processor 130 or in a peripheral, such as a compact disc. The URL 350 may, as an example, define a location on a compact disc that is in a compact disc player connected to the computer 102. The processor 130 will then retrieve information located the compact disc rather than on the Internet.

While illustrative and presently preferred embodiments of the invention have been described in detail herein, it is to be understood that the inventive concepts may be otherwise variously embodied and employed and that the appended claims are intended to be construed to include such variations except insofar as limited by the prior art.

## Claims

1. A method of retrieving information comprising:
providing an imaging device (200);
providing a processor (130) associated with said imaging device (200), wherein said processor (130) is connected to the Internet;
providing at least one indicium (380), wherein said at least one indicium (380) is representative of the Internet location of said information that is to be retrieved;
generating machine-readable data representative of said at least one indicium (380) with said imaging device (200);
transmitting said machine-readable data from said imaging device (200) to said processor (130);
analyzing said machine-readable data to determine said Internet location of said information that is to be retrieved;
instructing said processor (130) to retrieve said information from said Internet location.

2. The method of claim 1 further comprising:
providing a display (110); and
displaying said information on said display (100).

3. The method of claim 1 wherein said indicium (380) is a universal resource locator.

4. The method of claim 1 wherein said indicium (380) is a bar code.

5. The method of claim 1 wherein said location is a web page.

6. The method of claim 1 wherein said imaging device (200) is a bar code reader.

7. The method of claim 1 wherein said imaging device (200) is a text scanning device.

8. A data retrieval system comprising:
a computer processor (130);
a scanning device (200), operatively associated with said computer processor (130), said scanning device (200) adapted to convert an indicium (380) to machine-readable data;
deciphering means (412) for convening said machine-readable data to an Internet address specified by said indicium (380);
Internet browsing means (416) for accessing the Internet at said Internet address specified by said indicium (380) and receiving data from said Internet address.

9. The system of claim 8 further comprising transmission means (210) for transmitting said machine-readable data to said computer processor (130).

10. The system of claim 8 further comprising a monitoring means (410) for monitoring whether machine-readable data is being transmitted from said scanning device (200) to said computer processor (130).
